# EUROPEAN PATENT SPECIFICATION

(11) **EP 3 032 696 B1**
(45) Date of publication and mention of the grant of the patent: **03.10.2018**
(21) Application number: 15198189.1
(22) Date of filing: 07.12.2015
(51) Int. Cl.: H02J 9/06, H02J 7/00

(54) **EMERGENCY LIGHTING UNIT**
NOTBELEUCHTUNGSEINHEIT
UNITÉ D'ÉCLAIRAGE D'URGENCE

(30) Priority: 10.12.2014 GB 201421991
(43) Date of publication of application: 15.06.2016
(73) Proprietor: Tridonic GmbH & Co KG, 6851 Dornbirn (AT)
(72) Inventor: Frankland, James, Barton, DL10 6SL (GB)
(74) Representative: Rupp, Christian

(56) References cited:
- EP-A2- 1 953 894
- US-A- 4 029 993

## Description

The present invention relates to a circuit for an emergency lighting device according to the precharacterizing part of claim 1.

Emergency lighting devices are essential for realizing, in larger buildings or complexes, lighting systems that provide adequate lighting even in the event of failure of the building's general power supply. Evacuation or assistance measures can be performed safely only if certain relevant parts or areas of buildings continue to be illuminated in the event of failure of the electric power supply. Accordingly, such emergency lighting devices are used, in particular, for illuminating escape routes and safety devices like extinguishers. Illuminated exit signs identify escape routes and emergency exits.

Emergency lighting devices of the generic type accordingly have an energy storage unit, in particular a battery or accumulator that is charged by the general mains supply voltage in a non-emergency state. For this purpose there is provided a charging circuit that is connected on the input side to the mains supply voltage and, during the charging operation, supplies energy to the energy storage unit, which stores this energy. In the emergency lighting operation, the light source is activated and operated, for which purpose the energy provided by the energy storage unit is used. The emergency state is usually identified automatically by such devices by monitoring of the mains supply voltage for example.

A driving circuitry for driving the light source from the energy storage unit in an emergency state is known from DE 10 2010 028 296 A1.

Since the storage capacity of the energy storage unit is clearly limited, light sources that consume relatively little energy are used preferably. Accordingly, such emergency lighting devices are preferably equipped with gas discharge lamps, in particular fluorescent tubes. Increasingly, however, light sources in the form of light-emitting semiconductors, in particular LEDs, are being used, since these light sources also have high efficiency and, accordingly, can be used in an energy-saving manner. While emergency lighting devices for anti-panic lighting will only be lighted in case of an emergency state, it has been common practice to illuminate exit signs and the like in both the emergency state and the non-emergency state.

US 5739639 A discloses an illuminated exit sign in which a LED array is lighted in both the emergency state and the non-emergency state. In US 5739639 A, the LED array is connected in series to the energy storage unit such that the current supplied from a current limited source both charges the battery and always drives the LED array simultaneously.

Accordingly there is an optimized charging of the energy storage.

Document EP 1 953 894 A2 discloses a circuit for an emergency lighting device according to the preamble of claim 1.

It is an object of the present invention to provide a more versatile emergency lighting device.

Accordingly, the invention proposes an emergency lighting device using a clocked charge converter.

These objects are achieved by a circuit and an emergency lighting device according to the enclosed independent claim 1. Advantageous features of the present invention are defined in the corresponding subclaims.

According to the present invention, the circuit for an emergency lighting device comprises output terminals for driving emergency lighting means, a storage unit for electric energy, such as a battery and input terminals for being supplied with an AC voltage. The emergency lighting device further comprises an isolated converter, preferably a flyback converter, connected to the input terminals which feeds a constant current through the emergency lighting means via an lamp driver circuit, preferably a buck converter, in a non-emergency state in which the AC voltage is present the circuit. The emergency lighting device further comprises an emergency driving circuitry for driving the emergency lighting means , when connected to the output terminals, from the energy storage unit in an emergency state in which the AC voltage fails. In the non-emergency state in which the AC voltage is present the charging of the energy storage unit is performed by a clocked charge converter, preferably a buck converter, connected to the output of the isolated converter.

A battery charge indicator circuit is connected to the clocked charge converter.

The battery charge indicator circuit comprises a battery charge indication LED which indicates activity of the clocked charge converter.

The battery charge indicator circuit comprises a DC reservoir circuit which may activate the battery charge indication LED.

The DC reservoir circuit activates the battery charge indication LED only in case that the clocked charge converter is operated at a certain duty cycle, preferably with a duty cycle higher than twenty percent The clocked charge converter is preferably not clocked in an emergency state in which the AC voltage fails. Preferably, the lighting means is an LED array.

The present invention provides an emergency lighting device that can be operated in both the maintained mode and the non-maintained mode.

The invention is to be explained more detailed in the following with reference to the accompanying drawing, wherein:
FIG. 1 shows, in schematic form, a first embodiment of the circuit for an emergency lighting device according to the present invention.
FIG. 2 shows a part of a first embodiment of the circuit for an emergency lighting device according to the present invention.

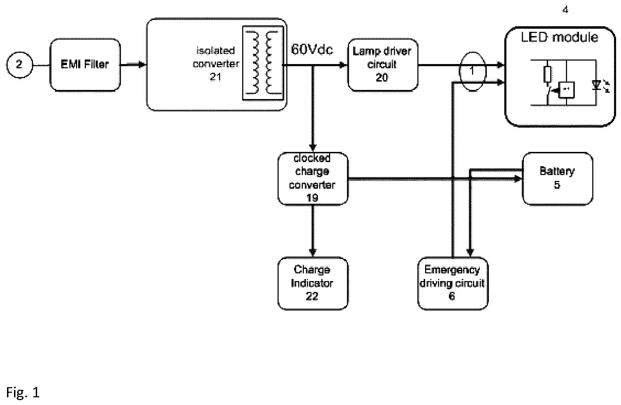

In the first embodiment represented in FIG. 1, the circuit according to the present invention, which is represented in a simplified manner and denoted by the reference 1, is intended for operation of an LED array as a light source.

The circuit 1 shown in Fig. 1 comprises a storage unit 5 for electric energy, such as a battery, and input terminals 2; 2a, 2b for being supplied with an AC voltage, and an isolated converter 21, preferably a flyback converter, connected to the input terminals 2; 2a, 2b which feeds a constant current through the emergency lighting means 4 via an lamp driver circuit 20, preferably a buck converter, in a non-emergency state in which the AC voltage is present the circuit 1. The circuit further comprises an emergency driving circuitry 6 for driving the emergency lighting means 4, when connected to the output terminals, from the energy storage unit 5 in an emergency state in which the AC voltage fails.

In the non-emergency state in which the AC voltage is present the charging of the energy storage unit 5 is performed by a clocked charge converter 19, preferably a buck converter, connected to the output of the isolated converter 21.

A battery charge indicator circuit 22 is connected to the clocked charge converter 19.

Depending on requirements, there can be different charge cycles, namely initialization charge, power charge and trickle charge. With the present invention, the circuit 1 can be operated in the so-called maintained mode when the initialization or power charge is completed and the trickle charge is started.

The charge cycles can be controlled or detected by a charge controller (not show) which controls the switching means to switch between the non-maintained mode and the maintained mode based on the charge cycle.

According to the present invention, in the emergency state, an AC voltage shown in Fig. 1 is not supplied to the input terminal 2 and the isolated converter 21 does not transfer energy over the isolation barrier. Thus the isolated converter 21 is not feeding the lamp driver circuit 20 and the lamp driver circuit 20 does not generate a constant current which is fed through the light source 4. In addition there is no current fed the through clocked charge converter 19 to the energy storage unit 5. If the emergency state is detected by the emergency driving circuitry 6 based on loss of AC voltage, loss of constant current/charging voltage, or an external control signal (not shown), the emergency driving circuitry 6 drives the light source 4 from the energy storage unit 5 with a constant power or constant current irrespective of the state of charge of the energy storage unit 5. This measure is of particular importance, since the power of the energy storage unit 5 clearly declines over time, which, however, should not affect the light intensity of the light source 4 during the emergency lighting operation.

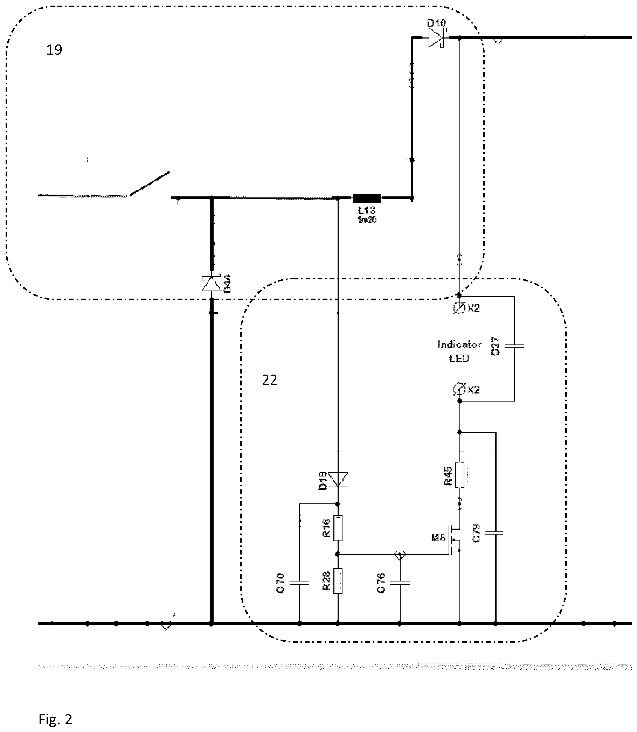

In the emergency state when an AC voltage is not supplied to the input terminal 2 shown in Fig. 2, the energy storage unit 5 is not charged which is detected by or reported to the emergency lighting driver 6 the operation of which is controlled by a battery control means 12.

In this case, the emergency driving circuitry 6 connected to the light source 4 by lines 6a and 6b drives the light source 4 with electric power out of the energy storage unit 5 to which the emergency lighting driver 6 is connected. The battery control means (not shown) is configured to control operation of the emergency driving circuitry 6 but also to perform self testing and check battery status.

Fig. 2 shows a part of the circuit 1 in particular the battery charge indicator circuit 22 in more detail and the clocked charge converter 19.

The clocked charge converter 19 is shown in this example as a buck converter which may be connected to the output of the isolated converter 21 (not shown in Fig. 2). The clocked charge converter 19 formed by a buck converter comprises a clocked switch, and freewheeling diode D44 and a choke L13. Following to the choke L13 there may be connected a blocking diode D10. The output of the clocked charge converter 19 may be connected to the energy storage unit 5, e.g. a battery.

The battery charge indicator circuit 22 comprises a battery charge indication LED (Indicator LED) which indicates activity of the clocked charge converter 19. The battery charge indicator circuit 22 may comprise a decoupling diode D18 which is connected with its anode to the connection point of the freewheeling diode D44 and a choke L13 of the clocked charge converter 19. The cathode of the decoupling diode D18 may be connected to a DC reservoir circuit which may be formed by a resistor-capacitor circuit.

For instance the DC reservoir circuit may be formed by a first resistor R16 in series with a second resistor R28 whereby a first capacitor C76 is arranged in parallel to the resistor R28. A second capacitor C70 may be placed in parallel to the series connection of first resistor R16 and second resistor R28.

The DC reservoir circuit is connected to an activation switch M8, preferably a N-channel MOSFET. In the embodiment shown in Fig. 2 the output of the DC reservoir circuit in particular the connection point of the first capacitor C76 with the first resistor R16 and second resistor R28 is connected to the gate of the activation switch M8.

The DC reservoir circuit is charged to a certain voltage level only in case that the clocked charge converter 19 is operated at a certain duty cycle, preferably with a duty cycle higher than twenty percent.

If the charge voltage of the DC reservoir circuit has reached a certain voltage level of the activation switch M8 will switch on and allow a current flow through the battery charge indication LED (Indicator LED) which is preferably arranged in series between the output of the clocked charge converter 19 and the activation switch M8.

By using the switching wave form of the clocked charge converter 19 to charge up a capacitive voltage divider that will turn on an activation switch M8, preferably a N-channel MOSFET. When the activation switch is turned on a current will flow through the charge indicator. This solution enables a supply of a charge indicator LED in a virtually lossless manner.

The clocked charge converter 19 is preferably not clocked in an emergency state in which the AC voltage fails.

## Claims

1. Circuit for an emergency lighting device, comprising:
- output terminals for driving emergency lighting means (4),
- a storage unit (5) for electric energy, such as a battery,
- input terminals (2; 2a, 2b) for being supplied with an AC voltage,
- an isolated converter (21), preferably a flyback converter, connected to the input terminals (2; 2a, 2b) and arranged to feed a constant current through the emergency lighting means (4) via an lamp driver circuit (20), preferably a buck converter, in a non-emergency state in which the AC voltage is present at the circuit (1),
- an emergency driving circuitry (6) arranged to drive the emergency lighting means (4) in an emergency state in which the AC voltage fails, wherein in the emergency state the emergency driving circuitry (6) drives the emergency lighting means (4) from the energy storage unit (5) and wherein the emergency lighting means (4) is connected to the output terminals,
**characterized in that:**
- the circuit is arranged such that, in the non-emergency state, in which the AC voltage is present, the charging of the energy storage unit (5) is performed by a clocked charge converter (19), preferably a buck converter,
- the input of the clocked charge converter (19) is connected to the output of the isolated converter (21,
- the output of the clocked charge converter (19) is connected to a battery charge indicator circuit (22) and-an input of the storage unit (5),
said battery charge indicator circuit (22) comprising a battery charge indication LED, which indicates activity of the clocked charge converter (19),
- the battery charge indicator circuit (22) comprises a DC reservoir circuit which comprises a resistor-capacitor circuit, and
- the DC reservoir circuit is arranged to activate the battery charge indication LED only in case that the clocked charge converter (19) is operated above a certain duty cycle, preferably with a duty cycle higher than twenty percent, thereby charging the DC reservoir circuit above a threshold voltage value.

2. Circuit according to claim 1, wherein
the clocked charge converter (19) is not clocked in an emergency state in which the AC voltage fails.

3. Circuit according to claim 1 or 2, wherein
the lighting means (4) is a LED array.

4. Emergency lighting device comprising the circuit according to any one of claims 1 to 3.

## Patentansprüche

1. Schaltung für Notbeleuchtungsvorrichtung, umfassend:
- Ausgangsanschlüsse zum Ansteuern von Notbeleuchtungsmitteln (4),
- eine Speichereinheit (5) für elektrische Energie, wie beispielsweise eine Batterie,
- Eingangsanschlüsse (2; 2a, 2b) zur Versorgung mit einer AC-Spannung,
- einen isolierten Wandler (21), vorzugsweise einen Sperrwandler, der mit den Eingangsanschlüssen (2; 2a, 2b) verbunden und so ausgelegt ist, dass er einen konstanten Strom durch die Notbeleuchtungsmittel (4) über eine Lampentreiberschaltung (20), vorzugsweise einen Abwärtswandler, in einem Nicht-Notzustand einspeist, in welchem die AC-Spannung an der Schaltung (1) vorhanden ist,
- eine Not-Treiberschaltung (6), die so ausgelegt ist, dass sie das Notbeleuchtungsmittel (4) in einem Notzustand ansteuert, in welchem die AC-Spannung ausfällt, wobei die Not-Treiberschaltung (6) das Notbeleuchtungsmittel (4) im Notzustand von der Energiespeichereinheit (5) ansteuert, und wobei das Notbeleuchtungsmittel (4) mit den Ausgangsanschlüssen verbunden ist,
**dadurch gekennzeichnet, dass**:
- die Schaltung derart ausgelegt ist, dass im Nicht-Notzustand, in welchem AC-Spannung vorhanden ist, das Laden der Energiespeichereinheit (5) durch einen getakteten Ladewandler (19), vorzugsweise einen Abwärtswandler, durchgeführt wird,
- der Eingang des getakteten Ladewandlers (19) mit dem Ausgang des isolierten Wandlers (21) verbunden ist,
- der Ausgang des getakteten Ladewandlers (19) mit einer Batterieladeanzeigeschaltung (22) und einem Eingang der Speichereinheit (5) verbunden ist,
- die Batterieladeanzeigeschaltung (22) eine Batterieladeanzeige-LED umfasst, welche Aktivität des getakteten Ladewandlers (19) anzeigt,
- die Batterieladeanzeigeschaltung (22) eine DC-Speicherschaltung umfasst, die eine Widerstands-Kondensator-Schaltung umfasst, und
- die DC-Speicherschaltung so ausgelegt ist, dass sie die Batterieladeanzeige-LED nur dann aktiviert, wenn der getaktete Ladewandler (19) über einem bestimmten Einschaltverhältnis, vorzugsweise einer Einschaltverhältnis von über zwanzig Prozent, betrieben wird, wodurch die DC-Speicherschaltung über einen Schwellenspannungswert geladen wird.

2. Schaltung nach Anspruch 1, wobei der getaktete Ladewandler (19) in einem Notzustand, in welchem die AC-Spannung ausfällt, nicht getaktet wird.

3. Schaltung nach Anspruch 1 oder 2, wobei es sich bei dem Beleuchtungsmittel (4) um eine LED-Anordnung handelt.

4. Notbeleuchtungsvorrichtung, umfassend die Schaltung nach einem der Ansprüche 1 bis 3.

## Revendications

1. Circuit pour un dispositif d'éclairage d'urgence, comprenant :
- des bornes de sortie pour commander des moyens d'éclairage d'urgence (4),
- une unité de stockage (5) pour l'énergie électrique, telle qu'une batterie,
- des bornes d'entrée (2 ; 2a, 2b) pour recevoir une tension alternative,
- un convertisseur isolé (21), de préférence un convertisseur flyback, connecté aux bornes d'entrée (2 ; 2a, 2b) et agencé pour fournir un courant constant par l'intermédiaire des moyens d'éclairage d'urgence (4) via un circuit de dispositif de commande de lampe (20), de préférence un convertisseur buck, dans un état non d'urgence dans lequel la tension alternative est présente au niveau du circuit (1),
- des éléments de circuit de commande d'urgence (6) agencés pour commander les moyens d'éclairage d'urgence (4) dans un état d'urgence dans lequel la tension alternative est défaillante, dans lequel, dans l'état d'urgence, les éléments de circuit de commande d'urgence (6) commandent les moyens d'éclairage d'urgence (4) à partir de l'unité de stockage d'énergie (5) et dans lequel les moyens d'éclairage d'urgence (4) sont connectés aux bornes de sortie,
**caractérisé en ce que** :
- le circuit est agencé de sorte que, dans l'état non d'urgence, dans lequel la tension alternative est présente, la charge de l'unité de stockage d'énergie (5) soit effectuée par un convertisseur de charge commandé par horloge (19), de préférence un convertisseur buck,
- l'entrée du convertisseur de charge commandé par horloge (19) est connectée à la sortie du convertisseur isolé (21),
- la sortie du convertisseur de charge commandé par horloge (19) est connectée à un circuit d'indicateur de charge de batterie (22) et à une entrée de l'unité de stockage (5),
ledit circuit d'indicateur de charge de batterie (22) comprenant une DEL d'indication de charge de batterie, qui indique l'activité du convertisseur de charge commandé par horloge (19),
- le circuit d'indicateur de charge de batterie (22) comprend un circuit réservoir de courant continu qui comprend un circuit de résistance-condensateur, et
- le circuit réservoir de courant continu est agencé pour activer la DEL d'indication de charge de batterie uniquement dans le cas où le convertisseur de charge commandé par horloge (19) est mis en oeuvre au-dessus d'un certain rapport cyclique, de préférence un rapport cyclique supérieur à vingt pour cent, chargeant de ce fait le circuit réservoir de courant continu au-dessus d'une valeur de tension de seuil.

2. Circuit selon la revendication 1, dans lequel
le convertisseur de charge commandé par horloge (19) n'est pas commandé par horloge dans un état d'urgence dans lequel la tension alternative est défaillante.

3. Circuit selon la revendication 1 ou 2, dans lequel les moyens d'éclairage (4) sont un réseau de DEL.

4. Dispositif d'éclairage d'urgence comprenant le circuit selon l'une quelconque des revendications 1 à 3.
